# EUROPÄISCHE PATENTSCHRIFT

(11) **EP 1 263 610 B1**
(45) Veröffentlichungstag und Bekanntmachung des Hinweises auf die Patenterteilung: **08.10.2008**
(21) Anmeldenummer: 01925481.2
(22) Anmeldetag: 16.03.2001
(51) Int. Cl.: B42D 15/10, B32B 33/00, B32B 27/36

(54) **LAMINAT, INSBESONDERE IN FORM VON KARTEN, UND VERFAHREN ZU DESSEN HERSTELLUNG**
LAMINATE, IN PARTICULAR IN THE FORM OF CARDS AND A METHOD FOR PRODUCING THE SAME
STRATIFIE, EN PARTICULIER SOUS FORME DE CARTES, ET SON PROCEDE DE FABRICATION

(30) Priorität: 17.03.2000 DE 10013410
(43) Veröffentlichungstag der Anmeldung: 11.12.2002
(73) Patentinhaber: OVD Kinegram AG, 6301 Zug (CH)
(72) Erfinder: GRIEBEL, Thomas, CH-6331 Hünenberg (CH); BREHM, Ludwig, 91352 Adelsdorf (DE); HANSEN, Achim, CH-6300 Zug (CH)
(74) Vertreter: LOUIS, PÖHLAU, LOHRENTZ
(86) Internationale Anmeldenummer: PCT/EP2001/003059
(87) Internationale Veröffentlichungsnummer: WO 2001/068383

(56) Entgegenhaltungen:
- WO-A-95/09084
- DE-A- 4 314 948
- DE-A- 19 631 283
- US-A- 5 591 527

## Beschreibung

Die Erfindung betrifft Laminate, insbesondere in Form von Karten, z.B. Ausweisen, Kreditkarten od. dgl., die wenigstens zwei fest miteinander verbundene Folien umfassen, zwischen denen Sicherheitselemente und ggf. Identifikationselemente angeordnet sind, wobei wenigstens eine der Folien halb oder vollständig transparent ist, so dass die Sicherheits- und ggf. Identifikationselemente durch diese transparente Folie hindurch sichtbar sind, und wobei weiter wenigstens ein Sicherheitselement von einer räumlichen, beugungsoptisch wirksamen Struktur gebildet ist, die durch eine entsprechend strukturierte und mit einer die Erkennbarkeit der Struktur verbessernden Beschichtung versehene Oberfläche einer Lack- oder Polymerschicht erzeugt ist.

Weiterhin ist Gegenstand der Erfindung ein Verfahren zur Herstellung eines Laminates aus wenigstens zwei Folien, von denen mindestens eine halb oder vollständig transparent ist und zwischen denen eine beugungsoptisch wirksame Struktur aufweisende Sicherheitselemente und ggf. Identifikationselemente angeordnet sind, wobei auf eine erste Folie die Sicherheits- und/oder Identifikationselemente aufgebracht werden und anschliessend die zweite Folie unter Einwirkung von Wärme und Druck ganzflächig auflaminiert wird.

Laminate der vorstehend genannten Art, wie sie beispielsweise aus der WO 95/09084 bekannt sind, werden sehr häufig zur Herstellung von Karten, beispielsweise Ausweisen, Kreditkarten, Führerscheinen in Kartenform etc. verwendet. Entsprechende Laminate können beispielsweise auch als Identifikationsseite in Reisepässen oder sonst als Bestandteil eines entsprechend zu sichernden Dokumentes eingesetzt werden. Dabei werden an solche Karten bzw. Laminate gewisse Anforderungen gestellt. Zum einen soll die Karten-Gebrauchsdauer im Mittel bei 5 bis 30 Jahren liegen. Die Karten sollen weiter eine hohe mechanische Stabilität sowie eine hohe Kratz-, Abrieb- und Chemikalien-Beständigkeit aufweisen. Ausserdem soll es möglich sein, für eine zuverlässige Sicherung der Karte gegen Fälschung und Manipulation zu sorgen. Schliesslich ist es häufig erforderlich, bei derartigen Karten bzw. Laminaten auch noch die Möglichkeit einer Personalisierung, entweder während der Kartenherstellung oder im Anschluss an den Karten-Herstellungsprozess mittels der für die Personalisierung üblichen Verfahren, z.B. durch Bedrucken oder Beschriftung mittels Laserverfahren, vornehmen zu können.

Laminate, bei denen Sicherheits- bzw. Identifikationselemente zwischen zwei Schichten angebracht sind, haben dabei gegenüber solchen Dokumenten od. dgl., die eine Grundschicht aufweisen, auf der dann die Sicherheits- bzw.

Identifikationselemente angeordnet sind, auf jeden Fall den Vorteil, dass die Sicherheits- und Identifikationselemente, infolge ihres Einschlusses zwischen den beiden Decklagen, gegen Chemikalien, Abrieb und direkte Fälschung weitgehend gesichert sind.

Bisher ging man nun bei der Herstellung entsprechender Laminate so vor, dass die Sicherheits- oder Identifikationselemente im allgemeinen in einem Druck- oder Transferverfahren auf eine erste Folie aufgebracht wurden, die dann entweder mit einer Lackschicht vollflächig überdeckt oder mit einer zweiten Folie überlaminiert wurde, wobei die Folienmaterialien meist unterschiedlich waren (sh. z.B. WO 95/09084).

Diese Vorgehensweise hat ebenfalls mehrere Mängel. So ist es zum einen so, dass beugungsoptisch wirksame oder diffraktive Strukturen bei aus einem Laminat bestehenden Karten im allgemeinen lediglich in eine auf die erste Folie aufgebrachte Lackschicht eingeprägt wurden, wobei diese Lackschicht infolge ihrer geringen Dicke und des Freiliegens der beugungsoptisch wirksamen Struktur bereits während des Fertigungsvorganges leicht beschädigt oder beschmutzt werden konnte. Wenn dann auf die erste Folie eine zweite Folie auflaminiert wird, besteht die Gefahr, dass infolge zu hoher Temperatur oder zu grossen Druckes oder Scherung die beugungsoptisch wirksame Struktur während des Laminierprozesses beschädigt bzw. in störender Weise verändert wird. Um dies zu vermeiden, hat man daher zur Schonung der temperaturempfindlichen Lackschichten mit den beugungsoptisch wirksamen Strukturen beim Rollen-Auflaminieren der weiteren Decklage nur sehr kurze Einwirkzeiten (von unter 1 Sek.) bei effektiven Materialtemperaturen im Bereich von lediglich 60 bis 160 °C verwendet.

Diese Vorgehensweise hat ebenfalls gravierende Nachteile, wobei der wesentlichste Mangel darin zu sehen ist, dass derart geringe Temperaturen in Verbindung mit einer vergleichsweise kurzen Einwirkzeit nur dann ausreichen, um die beiden Folien des Laminates hinreichend fest miteinander zu verbinden, wenn entsprechend niedrig schmelzende und damit gegen Beschädigung anfällige Folien verwendet werden. Nachteilig bei der bekannten Vorgehensweise ist ausserdem, dass für die Sicherheits- bzw. Identifikationselemente, die im Inneren des Laminates angeordnet werden, ganz bestimmte Substanzen eingesetzt werden müssen, die sich mit den Materialien der beiden Folien sehr gut verbinden und ausserdem noch in sich hinreichende Festigkeit haben, weil nur so verhindert werden kann, dass die beiden Folien des Laminates, die die Sicherheits- bzw. Identifikationselemente zwischen sich einschliessen, gewollt oder ungewollt voneinander getrennt werden. Um eine derartige ungewollte Trennung, die eine Fälschung, z.B. durch Austausch eines zwischen den Folien vorhandenen Photos oder sonstigen Identifikationselementes ermöglichen würde, zu verhindern, muss auch dafür gesorgt werden, dass die zwischen den Folien vorhandenen Materialien nicht beispielsweise durch Aufschmelzen erweicht werden können. Dies bedeutet aber, dass man hinsichtlich der für die Sicherheits- und Identifikationselemente verwendbaren Materialien ganz erheblichen Beschränkungen unterliegt.

Um ein Trennen der beiden Folien voneinander zu erschweren, ist es aus der WO 95/09084 bereits bekannt, die Sicherheitselemente nur bereichsweise vorzusehen, wobei zwischen den Sicherheitselementen die diese zwischen sich einschliessenden Folien direkt aneinander angrenzen. Damit die Folien sicher aneinander haften, wird gemäss der WO 95/09084 eine ganz bestimmte Material-Kombination vorgeschlagen. Es soll nämlich die eine der Folien eine PVC-Folie sein, während die andere Folie von einem amorphen Copolyester gebildet ist. Diese Folien-Kombination hat ebenfalls Nachteile, insbesondere den Nachteil, dass sich nicht die häufig gewünschte Festigkeit und Temperaturbeständigkeit erzielen lässt. Auch die optischen Eigenschaften von PVC-Folien oder Folien aus amorphen Copolyestern lassen häufig zu wünschen übrig.

Der Erfindung liegt daher die Aufgabe zugrunde, für entsprechende Laminate einen neuen Aufbau vorzuschlagen, der einerseits weitgehende Freiheit hinsichtlich der Art und chemischen Zusammensetzung der zwischen den Folien untergebrachten Sicherheits- und Identifikationselemente bietet, trotzdem aber Gewähr dafür gibt, dass die Folien einerseits zuverlässig und im Normalfall nicht trennbar aneinander haften, so dass die Sicherheits- und Identifikationselemente im Inneren des Laminates zuverlässig geschützt und eine Fälschung nahezu vollständig ausgeschlossen ist. Andererseits soll das Laminat besonders gute optische und mechanische Eigenschaften aufweisen. Weiterhin soll mit der Erfindung ein Verfahren vorgeschlagen werden, welches die Herstellung entsprechender Laminate in besonders vorteilhafter Weise gestattet.

Zur Lösung dieser Aufgabe wird erfindungsgemäss nun vorgeschlagen, ein Laminat der eingangs erwähnten Art gemäss dem kennzeichnenden Teil des Anspruches 1 auszubilden.

Für den Zusammenhalt der die Decklagen des Laminates bzw. der Karte insgesamt bildenden Folien sind somit nach der Erfindung lediglich diese Folien verantwortlich, was bedeutet, dass als Sicherheits- bzw.

Identifikationselemente auch Materialien verwendet werden können, die vergleichsweise schlecht an den Folien haften. Trotzdem wird eine zuverlässige Sicherung gegen Trennen der Folien voneinander und damit gegen Eingriffe an den Sicherheits- oder Identifikationselementen erreicht. Gemäss der Erfindung wird erstmals vorgeschlagen, als Decklagen Folien aus Polycarbonat (PC) und damit einem Material mit guten mechanischen und optischen Eigenschaften zu verwenden, wobei zwischen den PC-Folien Sicherheits- oder Identifikationselemente aus solchen Materialien eingeschlossen werden können, die normalerweise an Polycarbonat-Folien relativ schlecht haften. Für die Sicherheits- oder Identifikationselemente können so beispielsweise in einem Druckverfahren aufbringbare Lacke oder verformbare Lack- oder Polymerschichten für die Einbringung beugungsoptisch wirksamer Strukturen verwendet werden. Erstaunlicherweise hat sich gezeigt, dass trotz des Laminiervorganges die zwischen den Folien vorhandenen beugungsoptisch wirksamen Strukturen erhalten bleiben, wenn nur diese Strukturen in einen geeigneten Lack bzw. Polymer eingeprägt sind, und zwar auch dann, wenn zum Zusammenlaminieren der beiden Folien vergleichsweise hohe Temperaturen über einen längeren Zeitraum einwirken. Zudem kann die Haftung zwischen den PC-Folien durch Sicherheitselemente od. dgl. aus geeignetem Material gezielt vermindert werden, um so bei Manipulations- oder Fälschungsversuchen quasi "Sollbruchstellen" zu erzeugen.

Ein wesentliches Merkmal des Laminates gemäss der Erfindung ist im Vorhandensein der feinen graphischen Elemente oder alphanumerischen Zeichen zu sehen, die in einem zusammenhängenden Flächenbereich des Laminates die Sicherheits- und ggf. Identifikationselemente bilden. Da diese Elemente eine maximale Linienbreite oder Punktgrösse von weniger als 5 mm, vorzugsweise Abmessungen zwischen 0,1 und 3,0 mm, in einer Richtung aufweisen, ist sichergestellt, dass nicht, wie dies beispielsweise bei der Karte gemäss WO 95/09084 gezielt der Fall ist, bei einem Verbiegen der Karte od. dgl. die Folien gegeneinander verschoben werden können, was durchaus eine Trennung der beiden Folien voneinander erleichtern könnte. Darüber hinaus besteht nicht die Gefahr, dass sich z.B. beugungsoptisch wirksame Strukturen der Sicherheitselemente od. dgl. infolge gegenseitiger Verschiebung der Folien verändern bzw. beschädigt werden.

Um zu gewährleisten, dass die die Sicherheits- und ggf. Identifikationselemente einschliessenden Folien entsprechend fest aneinander haften, genügt es, wenn die beiden Folien in einem Anteil von wenigstens 25 % der Gesamtfläche des Laminates einander direkt benachbart sind, d.h. bei der Laminatherstellung direkt miteinander verschmolzen werden. In einem derartigen Fall ist es ohne Beschädigung und ohne besondere Massnahmen nicht möglich, die Folien voneinander zu trennen.

Um jedoch zu erreichen, dass auch nach entsprechenden mechanischen Einwirkungen od. dgl. die von den feinen Elementen oder alphanumerischen Zeichen gebildeten Sicherheits- und ggf. Identifikationselemente einwandfrei erkennbar sind und nicht beschädigt werden, wird nach der Erfindung vorgeschlagen, dass in dem die feinen Elemente oder alphanumerischen Zeichen aufweisenden zusammenhängenden Flächenbereich die die Sicherheits- und ggf. Identifikationselemente einschliessenden Folien in einem Anteil von 65 bis 95 % der Fläche des Flächenbereiches einander direkt benachbart, d.h. bei fertigem Laminat miteinander verschmolzen sind.

Wenn, wie nach der Erfindung vorgesehen, bei kartenförmiger Ausbildung des Laminates entlang des Kartenrandes ein Bereich von wenigstens 3 mm, vorzugsweise von 3 bis 10 mm Breite frei von Sicherheits- oder Identifikationselementen ist, bietet dies den Vorteil, dass entlang des Kartenrandes ein Bereich vorhanden ist, in dem die beiden PC-Folien vollflächig verbunden sind, wodurch zum einen eine gewaltsame Trennung der Folien weiter erschwert und zum anderen zuverlässig verhindert wird, dass Feuchtigkeit, Chemikalien od. dgl. über eine undichte Stelle in den Raum zwischen den beiden Folien eindringen.

Die Erkennbarkeit verbessernde Beschichtung der wenigstens ein Sicherheitselement bildenden, beugungsoptisch wirksamen Struktur kann in an sich üblicher Weise von einer Metallisierung gebildet sein. Beispielsweise kann eine sehr dünne Metallschicht, vorzugsweise Aluminiumschicht, ganzflächig oder bereichsweise auf die beugungsoptisch wirksamen Strukturen aufgedampft sein. Besonders günstig ist es jedoch, wenn erfindungsgemäss die reflexionserhöhende Beschichtung der ein Sicherheitselement bildenden, beugungsoptisch wirksamen Struktur von einem durchsichtigen Material gebildet ist, welches gegenüber dem an die Beschichtung angrenzenden, in Betrachtungsrichtung davor liegenden Material, einen deutlich unterschiedlichen Brechungsindex aufweist, wobei vorteilhafterweise der Unterschied zwischen dem Brechungsindex der durchsichtigen Beschichtung und dem des angrenzenden Materials wenigstens 0,3, vorzugsweise wenigstens 0,5 beträgt. Die Verwendung eines durchsichtigen Beschichtungsmaterials für die beugungsoptisch wirksame Struktur hat den Vorteil, dass irgendwelche in Betrachtungsrichtung hinter der beugungsoptisch wirksamen Struktur und der entsprechenden Beschichtung vorhandenen Elemente sichtbar sind. Dies ist besonders günstig, wenn beide Deckfolien des Laminates ebenfalls durchsichtig sind, weil dann das Laminat z.B. für die Beschichtung eines irgendwelche Angaben, z.B. Angaben zur Person eines Nutzers, enthaltenden Substrats verwendet werden kann. Selbstverständlich müssen nicht sämtliche beugungsoptisch wirksamen Strukturen mit dem durchsichtigen, reflexionserhöhenden Material beschichtet sein. Es ist vielmehr auch denkbar, nur bestimmte beugungsoptisch wirksame Strukturen mit einer durchsichtigen Beschichtung zu versehen, bei anderen Strukturen jedoch die übliche Beschichtung in Form einer Metallisierung zu verwenden. Als durchsichtige Beschichtung kommen insbesondere die üblichen aufdampfbaren dielektrischen Schichten, z.B. TiO₂ oder ZnS in Betracht.

Weiter kann es zweckmässig sein, zwischen der die Erkennbarkeit verbessernden Beschichtung der räumlichen Struktur des wenigstens einen Sicherheitselementes und jeder Folie wenigstens eine Lack- oder Polymerschicht anzuordnen, d.h. die räumliche Struktur derart zu plazieren, dass sie beidseits von einer derartigen Schicht eingeschlossen ist. Bei dieser Ausgestaltung ist auch bei Verwendung verhältnismässig hohen Druckes beim Aufeinanderlaminieren der beiden Folien mit sehr grosser Sicherheit gewährleistet, dass die räumliche Struktur des bzw. der Sicherheitselemente nicht verändert wird.

Während beim Stand der Technik meistens die Sicherheits- oder Identifikationselemente direkt durch Aufdrucken oder sonstigen Lackauftrag auf eine der Folien angebracht werden, ist erfindungsgemäss bevorzugt, dass wenigstens eines der Sicherheits- und/oder Identifikationselemente von der Dekorschicht einer (an sich bekannten) Transferfolie, insbesondere Heissprägefolie, gebildet ist. Die Verwendung entsprechender Heissprägefolien bietet etliche Vorteile. Insbesondere ergibt sich eine grosse Variabilität hinsichtlich der unterschiedlichen Sicherheits- bzw. Identifikationselemente. Darüber hinaus ist bei Heissprägefolien üblicherweise eine beugungsoptisch wirksame Struktur ohnehin zwischen zwei Lack- oder Polymerschichten eingeschlossen, so dass, vor allem wenn der Lack der Heissprägefolie völlig ausgehärtet bzw. ausreagiert ist, Formveränderungen infolge Druckeinwirkung beim Laminieren nicht mehr zu befürchten sind. Heissprägefolien lassen sich weiter in den unterschiedlichsten geometrischen Gestaltungen auf eine Folie aufbringen, wobei abhängig von der Art und dem Aufbau der verwendeten Heissprägefolie sowohl Sicherheits- als auch Identifikationselemente gebildet werden können. Auch könnten Heissprägefolien eingesetzt werden, die eine Magnetschicht als weitere Sicherungsmassnahme oder beispielsweise auch fluoreszierende Farben enthalten könnten. Ein wesentlicher Vorteil in der Verwendung von Heissprägefolien ist schliesslich der, dass sich - abhängig von der Ausbildung und Gestaltung der Dekorschicht der Heissprägefolie - auch die für die Erfindung wesentlichen sehr feinen Musterungen als Sicherheits- bzw. Identifikationselemente erzeugen lassen, wobei sich dann durch die Verbindung der Folien in den von der Dekorschicht der Heissprägefolie freigelassenen Zwischenräumen trotzdem eine sehr gute Stabilität des Laminates erreichen lässt.

Weiterhin ist erfindungsgemäss vorgesehen, dass ausserhalb des die feinen Elemente aufweisenden zusammenhängenden Flächenbereichs wenigstens ein Sicherheits- und/oder Identifikationselement in Form eines ein- oder mehrlagigen, etikettenartigen Flächenelementes vorgesehen ist. Derart etikettenartige Elemente haben den Vorteil, dass sie einfach zu übertragen sind und besonders auffällige Markierungen in dem Laminat darstellen.

Um - zumindest während der Herstellung - die Haftung der Sicherheits- und/oder Identifikationselemente an zumindest der einen Folie zu verbessern, kann es erfindungsgemäss vorteilhaft sein, wenn wenigstens eines der Sicherheits- und/oder Identifikationselemente an einer Oberfläche eine Kleberschicht aufweist, wobei eine derartige Kleberschicht natürlich auch an beiden Oberflächen vorhanden sein kann. Eine derartige Kleberschicht ist bei handelsüblichen Heisspräge- oder Laminierfolien sowie bei etikettenartigen Elementen meist ohnehin vorhanden. Selbst wenn diese Kleberschicht nicht oder nicht fest an dem Material der Folie haftet, spielt dies im vorliegenden Falle keine Rolle, weil ja die Verbindung der beiden Folien primär über die Bereiche erfolgt, in denen die Folien direkt aneinander anliegen.

In Weiterbildung der Erfindung kann es zweckmässig sein, wenn mindestens eine der Folien passerhaltig zu den Sicherheits- und/oder Identifikationselementen, mit einem Kleberauftrag versehen ist, wodurch die Haftung innerhalb des Laminates verbessert werden kann. Ein passerhaltiger Kleberauftrag kann aber auch den Zweck haben, die korrekte Ausprägung der Dekorschicht einer Heissprägefolie zu unterstützen, indem die Dekorschicht lediglich im Bereich des vorherigen Kleberauftrages beim Prägevorgang an der Folie haften bleibt.

Es ist weiter möglich, dass mindestens eine der Folien des Laminates an ihrer freien Oberfläche ganz oder teilflächlich mit einer Beschichtung versehen ist. Eine derartige Beschichtung kann einerseits die Aufgabe haben, Oberflächenrauhigkeiten der Decklage zu beseitigen. Als Beschichtung kann aber beispielsweise auch ein Aufdruck, ein Unterschriftenfeld, ein Magnetstreifen, eine Schutzschicht od. dgl. vorgesehen sein. Es ist auch denkbar, das fertige Laminat, z.B. über geeignete Druckverfahren, zu personalisieren. Auch die Anbringung weiterer Schutzschichten, insbesondere nach Beschichtung einer oder beider freien Oberflächen des Laminates, ist vorstellbar.

Die Erfindung befasst sich weiter mit einem Verfahren zur Herstellung eines Laminates der vorstehend erläuterten Ausbildung, wobei auf eine erste Folie die Sicherheits- und/oder Identifikationselemente aufgebracht werden und anschliessend die zweite Folie unter Einwirkung von Wärme und Druck ganzflächig auflaminiert wird. Erfindungsgemäss ist vorgesehen, ein derartiges Verfahren derart zu gestalten, dass als Folien Polycarbonat-Folien verwendet werden, dass auf die erste Folie Sicherheitselemente, die wenigstens zwei gehärtete oder trockene, transparente Lack- oder Polymerschichten sowie eine durchsichtige, die Erkennbarkeit einer Struktur verbessernde Beschichtung umfasst, und ggf. Identifikationselemente in einem Transfer- oder Laminierverfahren aufgebracht werden, wobei die Sicherheits- und/oder Identifikationselemente höchstens 65 % der Gesamtfläche des Laminates abdecken, dass anschliessend die zweite Folie aufgebracht wird, und dass dann die gebildete Schichtanordnung einer derartigen Wärmebehandlung unterzogen wird, dass die beiden Folien in ihren einander benachbarten Bereichen, in denen keine Sicherheits- oder Identifikationselemente vorhanden sind, miteinander verschmelzen.

Das Verfahren gemäss der Erfindung hat den Vorteil, dass es in der Praxis ohne Probleme angewendet werden kann, wobei durch entsprechende Steuerung der Wärmezufuhr beim Verbinden der beiden Folien ein sicherer Verbund zwischen diesen gewährleistet werden kann. Infolge des Vorhandenseins der Lack- oder Polymerschichten, die eine beugungsoptisch wirksame Struktur sowie eine durchsichtige, die Erkennbarkeit verbessernde Beschichtung ggf. zwischen sich einschliessen, wird trotz möglicherweise langer Wärmebehandlung zuverlässig erreicht, dass die beugungsoptisch wirksame Struktur beim Aufeinanderlaminieren der beiden Folien nicht beschädigt oder verändert wird. Diese Vorgehensweise hat auch den Vorzug, dass der apparative Aufwand vergleichsweise gering ist.

Wegen der Verwendung von Polycarbonat-Folien erfolgt zweckmässig die Heissverpressung während 1 bis 60 Min., vorzugsweise während 10 bis 50 Min., bei einer Temperatur von 170 bis 210 °C. Laminate aus Polycarbonat-Folien, die bei derart hohen Temperaturen miteinander verbunden sind, zeichnen sich durch besonders hohe mechanische und thermische Stabilität aus und erreichen dadurch eine weit über dem bisher Üblichen liegende Lebensdauer.

Schliesslich liegt es im Rahmen der Erfindung, dass bei dem Verfahren wenigstens die erste Folie vor dem Aufbringen der Sicherheits- und/oder Identifikationselemente bereichsweise, vorzugsweise passerhaltig zu wenigstens bestimmten dieser Elemente, mit einem Primer- oder Kleberauftrag versehen wird. Die an sich von der Aufbringung von optisch veränderlichen Sicherheitselementen auf Substrate, insbesondere in Form von Prägefolien, bekannte Verwendung eines vorgedruckten Primers oder Klebers hat vor allem den Vorteil, dass es auf diese Weise möglich ist, die Oberfläche der entsprechenden Folie besonders glatt zu gestalten, so dass auch nicht durch Unebenheiten oder Rauhigkeiten der Decklagen-Oberfläche die Wirkung der beugungsoptisch wirksamen Struktur beeinträchtigt wird. Dies ist besonders deshalb von Bedeutung, weil üblicherweise die Sicherheits- oder Identifikationselemente auf der rauhen Oberfläche der PC-Folie angeordnet sind, nachdem die rauhe Oberfläche dieser Folien sich üblicherweise im Inneren des Laminates befindet. Darüber hinaus kann ein derartiger Primer bzw. ein Kleber natürlich auch dazu dienen, die Haftung zwischen der Oberfläche der Folie einerseits sowie dem entsprechenden Sicherheits- und/oder Identifikationselement andererseits zu verbessern.

Weitere Merkmale, Einzelheiten und Vorteile der Erfindung ergeben sich aus der folgenden Beschreibung in Verbindung mit der Zeichnung.

Es zeigen -:
- Figur 1: beispielhaft eine aus einem Laminat gemäss der Erfindung bestehende Identifikationskarte;
- Figur 2: einen Schnitt durch die Karte gemäss Linie II-II in Figur 1;
- Figur 3: vergrössert den mit dem Pfeil III in Figur 2 gekennzeichneten Bereich der Karte im Schnitt;
- Figuren 4 bis 6: unterschiedliche Anordnungen und Kombinationen von Folien und Teilen von Sicherheits- bzw. Identifikationselementen jeweils im Schnitt und stark schematisiert, wobei ausserdem die Darstellung nicht massstabgetreu ist, insbesondere bezüglich der Dicke der einzelnen Schichten;
- Figur 7: in einer Darstellung ähnlich Figur 1 ein zweites Ausführungsbeispiel einer Identifikationskarte od. dgl.;
- Figur 8: einen Schnitt entlang der Linie VIII-VIII in Figur 7, und
- Figur 9: einen Schnitt entlang der Linie IX-IX in Figur 7, wobei auch die Figuren 8 und 9 ähnlich den Figuren 4 bis 6 nicht massstabgetreu sind.

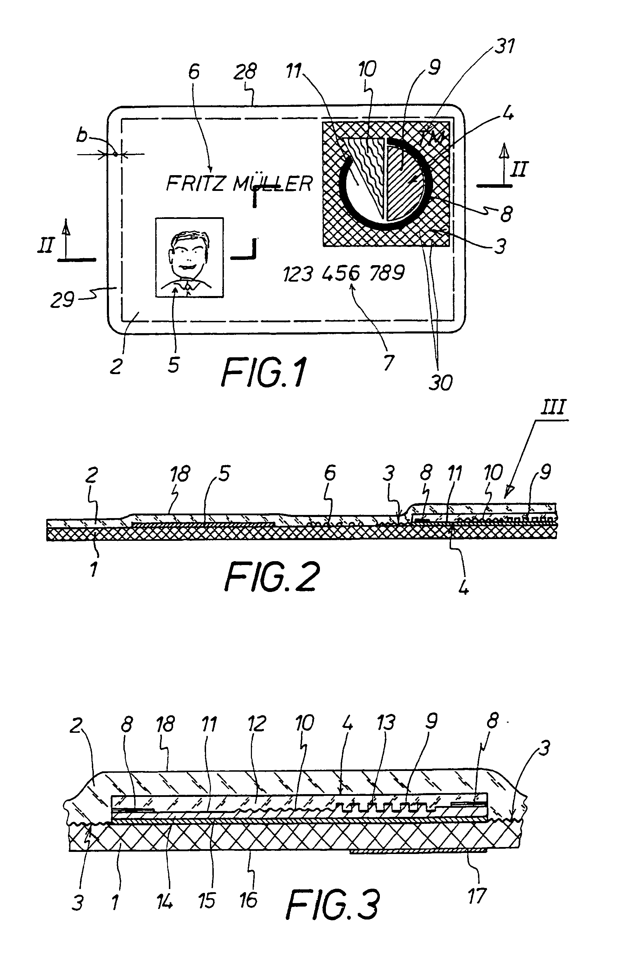

Die Identifikationskarte gemäss den Figuren 1 bis 3 umfasst, wie die Figuren 2 und 3 deutlich zeigen, eine untere Folie 1 sowie eine obere Folie 2, wobei beide Folien Polycarbonat-Folien sind.

Mindestens eine der Folien des Laminates, im vorliegenden Falle wenigstens die obere Folie 2, muss transparent sein, um zu gewährleisten, dass die zwischen den beiden Folien 1, 2 vorhandenen Elemente, im vorliegenden Falle ein Sicherheitsdruck 3, ein eine beugungsoptisch wirksame Struktur aufweisendes Sicherheitselement 4, ein Bild 5 des Ausweisinhabers sowie ein Schriftfeld 6 mit dem Namen des Ausweisinhabers und ein Schriftfeld 7 mit einer fortlaufenden Registrierungsnummer, erkannt werden können.

Das Sicherheitselement 4, welches im vorliegenden Falle das Firmen-Signet der Anmelderin darstellt, besteht aus mehreren Bestandteilen, nämlich einem äusseren Ring 8, der beispielsweise von einer planen und damit spiegelnden Fläche gebildet ist, einem halbkreisförmigen Bereich 9, der mit einer ersten Beugungsstruktur ausgestattet ist, einem dreieckförmigen Bereich 10, der eine zweite, von der Struktur des Bereiches 9 unterschiedliche ausgebildete beugungsoptisch wirksame Struktur aufweist, sowie dem z.B. transparenten Restbereich 11 zwischen Ring 8 sowie den Bereichen 9 und 10.

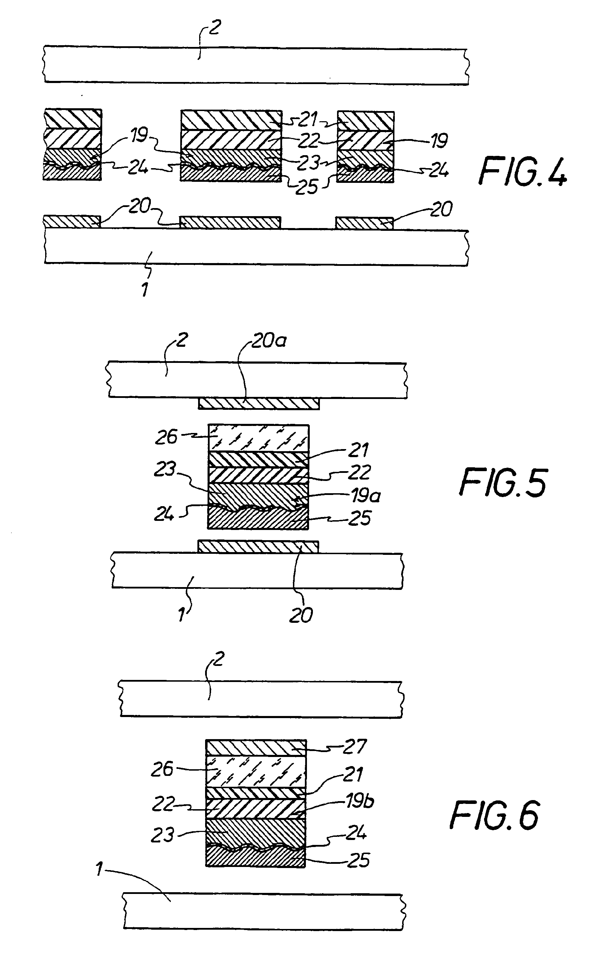

Bei dem Sicherheitselement 4 des dargestellten Ausführungsbeispieles handelt es sich um ein von der Dekorschicht einer Heissprägefolie gebildetes etikettenartiges Element, wobei der grundsätzliche Aufbau des Sicherheitselementes 4 aus Figur 3 ersichtlich ist. Das Sicherheitselement 4 gemäss Figur 3 umfasst eine Lack- oder Polymerschicht 12, die transparent ist und in die die beugungsoptisch wirksamen Strukturen der Bereiche 9 und 10 bei der Herstellung des Sicherheitselementes 4 hineinrepliziert sind. Die transparente Lack- oder Polymerschicht 12, die üblicherweise als Schutzschicht für ein entsprechendes Sicherheitselement bei Anbringung auf einer freien Fläche dient, ist in den Bereichen 8, 9 und 10 mit einer die Erkennbarkeit der Struktur verbessernden Beschichtung 13 versehen. Bei dieser Beschichtung 13 kann es sich beispielsweise um eine Metallschicht, z.B. eine im Vakuum aufgedampfte Aluminiumschicht, handeln. Es ist jedoch auch möglich, als Beschichtung 13 eine transparente dielektrische Schicht, z.B. TiO₂ oder ZnS, zu verwenden, sofern nur gewährleistet ist, dass die Beschichtung 13 einen Brechungsindex hat, der sich hinreichend von den Brechungsindizes der Lack- oder Polymerschicht 12 sowie der auf der gegenüberliegenden Seite an die Beschichtung 13 anschliessenden Lack- oder Polymerschicht 14 unterscheidet. Kombinationen aus (teilweise) demetallisierten und dielektrischen Schichten sind ebenfalls möglich. Weitere Einzelheiten zu den Lack- oder Polymerschichten 12 und 14 werden in Verbindung mit der Beschreibung der Figuren 4 bis 6 erläutert.

Schliesslich weist das Sicherheitselement 4 noch eine Kleberschicht 15 auf, mittels derer das Sicherheitselement 4 auf der unteren Folie 1 festgelegt ist.

Infolge der unterschiedlichen Struktur der Bereiche 8, 9, 10 und 11 erhält der Betrachter abhängig vom jeweiligen Betrachtungswinkel und vom Einfallswinkel des Lichtes unterschiedliche optische Effekte, die in an sich bekannter Weise dazu dienen, die Fälschung zu erschweren oder unmöglich zu machen.

In Figur 3 sind die Strukturen der Bereiche 9 und 10 schematisch als wellen- bzw. rechteckförmige Gitterbereiche dargestellt. In Wirklichkeit können die Strukturen der einzelnen Bereiche wesentlich komplizierter sein. Hier gibt es eine Vielzahl von Möglichkeiten, die dem Fachmann entsprechend geläufig sind.

Bei dem Sicherheitsdruck 3 kann es sich ebenfalls um einen der üblichen Drucke handeln, der direkt auf die untere Folie 1 aufgebracht wird, beispielsweise einen Sicherheitsdruck, wie er bei der Herstellung von Banknoten verwendet wird. Es wäre jedoch ohne weiteres auch denkbar, den Sicherheitsdruck 3 nicht direkt auf der Folie 1 vorzusehen sondern den Sicherheitsdruck 3 entweder mittels einer besonderen Heissprägefolie aufzubringen oder den Sicherheitsdruck 3 sowie die beugungsoptisch wirksamen Strukturen 8, 9, 10 zu einem gemeinsamen Sicherheitselement, sei es in Form einer entsprechenden ablösbaren Schicht einer Transferfolie, insbesondere einer Heissprägefolie, sei es in Form eines etikettenartigen Elementes, zu kombinieren.

Wie Figur 1 zeigt, besteht der Sicherheitsdruck 3 aus einer Vielzahl einzelner, im vorliegenden Fall diagonal verlaufender Linien 30, wobei die Linien 30 des Sicherheitsdruckes 3 einen zusammenhängenden Flächenbereich 31 bedecken. Die den Sicherheitsdruck bildenden Linien 30 haben eine relativ geringe Strichbreite und sind so ausgebildet und angeordnet, dass zwischen den Strichen 30 die beiden Folien 1 und 2 jeweils direkt aneinander anschliessen, wie dies in Figur 2 im Bereich 3 angedeutet ist. Anstelle der Linien 30 des Sicherheitsdruckes 3 könnten auch andere Elemente, beispielsweise beugungsoptisch wirksame Strukturen, vorgesehen sein, wobei diese feinen Elemente jedoch so angeordnet und ausgebildet sein müssen, dass die maximale Strichbreite bzw. Punktgrösse der Elemente in einer Richtung unter 5,0 mm, vorzugsweise zwischen 0,1 und 3 mm liegt. Darüber hinaus dürfen die Sicherheits- bzw. Identifikationselemente nicht mehr als 50 % der Gesamtfläche des zusammenhängenden Flächenbereiches 31 bedecken. Bei der Karte gemäss Figur 1 könnten beispielsweise Linien einer Strichbreite von etwa 0,3 mm vorgesehen sein, die in einem gegenseitigen Abstand von ca. 1 mm angeordnet sind.

Hinsichtlich des Bildes 5 kann beispielsweise so vorgegangen werden, dass ein entsprechendes Bild auf die Folie 1 mit Hilfe eines geeigneten Klebemittels aufgeklebt wird. Es wäre aber auch denkbar, auf der Folie 1 ein photochemisch oder durch energiereiche Strahlung, z.B. Lasergravur, entsprechend veränderbares Material vorzusehen und dann das Bild 5 direkt auf der inneren Oberfläche der unteren Folie 1 aufzuzeichnen. Das Bild könnte auch aufgedruckt werden, z.B. mittels Thermodruckes.

Hinsichtlich der Schriftfelder 6 und 7 bestehen ebenfalls verschiedene Möglichkeiten der Anbringung der Schrift. Es ist beispielsweise möglich, die Schrift in den Feldern 6 und 7 auf die untere Folie 1 direkt aufzudrucken oder in einem üblichen Thermotransfer-Verfahren aufzubringen. Denkbar wäre aber auch hinsichtlich der Schrift in den Feldern 6 und 7 eine Ausgestaltung der Karte derart, dass die Schrift durch Veränderung der Oberfläche der unteren Folie 1 der Karte erzeugt wird. Sowohl hinsichtlich des Namens im Schriftfeld 6 als auch des Bildes 5 sind insbesondere Verfahren in Betracht zu ziehen, die eine Erzeugung des Bildes 5 sowie Anbringung des Namens 6 erst nach grundsätzlicher Fertigstellung der Karte bzw. des Laminates gestatten, also beispielsweise Erzeugung mittels Laserstrahlung, die die transparente obere Folie 2 ohne Schädigung durchdringt, jedoch von in der unteren Folie 1 vorhandenen Substanzen entsprechend absorbiert wird und infolgedessen zu einer durch Erhitzung ausgelösten Veränderung der unteren Folie 1 führt.

Wenn die Schrift in den Feldern 6 und/oder 7 aufgedruckt oder in einem Thermotransfer-Verfahren, beispielsweise mittels entsprechender Folien, aufgebracht ist, sollte ebenfalls dafür gesorgt werden, dass die Strichbreite der Schrift in dem bevorzugten Bereich liegt, d.h. kleiner als 5 mm ist und vorzugsweise die Strichbreite zwischen 0,1 und 3,0 mm beträgt. Ausserdem sollte die insgesamt von den Schriftzeichen bedeckte Fläche in den Schriftfeldern 6 bzw. 7 weniger als 50 % der Gesamtfläche der Schriftfelder betragen, so dass die beiden Folien 1 und 2 in einem entsprechend grossen Flächenbereich direkt aneinander anschliessen und infolgedessen auch direkt miteinander verbunden werden können.

In Figur 3 ist schliesslich noch gezeigt, dass an der freien Unterseite 16 der unteren, beim gezeigten Ausführungsbeispiel nicht transparenten Folie 1 bereichsweise eine zusätzliche Beschichtung 17 vorhanden sein kann, wobei es sich dabei z.B. um einen Magnetstreifen, ein Unterschriftsfeld etc. handeln kann.

Bei der Herstellung der Karte gemäss Figur 1 wird nun so vorgegangen, dass auf die untere Folie 1, sei es in Form der einzelnen Karte, sei es in Form eines grösseren Bogens, der nachträglich zu Karten geschnitten wird, auf jeden Fall der Sicherheitsdruck 3 sowie das Sicherheitselement 4, ggf. in mehrfacher Ausfertigung, in üblicher Weise aufgebracht wird. Darüberhinaus können auch das Bild 5 sowie die Beschriftung in den Feldern 6 und/oder 7 gleichzeitig mit der oder anschliessend an die Aufbringung der Sicherheitselemente 3, 4 auf die entsprechende Oberfläche der unteren Folie 1 aufgebracht werden.

Anschliessend wird dann über die untere Folie 1 mit zumindest den Sicherheitselementen 3 und 4 die obere Folie 2 aufgebracht und anschliessend für eine Verbindung der beiden Decklagen 1 und 2 derart gesorgt, dass die Folien 1 und 2 in den freien Bereichen, d.h. in den Bereichen, wo weder Sicherheitselemente 3, 4 noch ein Bild 5 oder Schriften 6, 7 vorhanden sind, miteinander verschmelzen. Um hier eine zuverlässige Bindung der oberen Folie 2 an die untere Folie 1 zu gewährleisten, muss dafür gesorgt sein, dass wenigstens 25 % der Gesamtfläche des Laminates bzw. jeder Karte frei von Sicherheitselementen 3, 4 oder Identifikationselementen 5, 6, 7 sind. Als freie Bereiche zählen dabei selbstverständlich auch z.B. die Bereiche zwischen den einzelnen Linien des Sicherheitsdruckes 3 oder den einzelnen Buchstaben der Schriftbereiche 6, 7. In dem zusammenhängenden Flächenbereich 31 des Sicherheitsdruckes 3 und den Schriftfeldern 6, 7, die ebenfalls als zusammenhängende Flächenbereiche angesehen werden können, sind die Folien 1, 2 in einem Flächenanteil einander direkt benachbart, der 65 bis 95 % der Fläche der jeweiligen zusammenhängenden Flächenbereiche 6, 7 bzw. 31 entspricht.

Es ist sehr günstig, wenn man die Sicherheits- bzw. Identifikationselemente 3 bis 11 zwischen den Folien 1, 2 derart anordnet, dass entlang des Randes 28 der Karte ein durch die gestrichelte Linie in Figur 1 angedeuteter Bereich 29 frei von Sicherheits- und Identifikationselementen 3 bis 11 bleibt. Die Breite b des Bereiches 29 sollte mindestens 3 mm, vorzugsweise 3 bis 10 mm, betragen. Dieser "freie" Bereich 29 hat den Vorteil, dass auf diese Weise die beiden Folien 1, 2 entlang des Kartenrandes 28 zuverlässig verbunden werden, so dass Feuchtigkeit, Chemikalien od.dgl. nicht in den Zwischenraum zwischen den Folien 1, 2 eindringen können.

Die obere Folie 2 wird auf die untere Folie 1 aufgelegt. Danach muss eine hinreichend hohe Erhitzung während eines ausreichend langen Zeitraumes folgen, um zuverlässig ein entsprechendes Anschmelzen der beiden Folien 1, 2 im Grenzbereich zu gewährleisten. Es hat sich dabei gezeigt, dass bei Verwendung eines Polycarbonats für die beiden Folien 1 und 2 Presszeiten von 5 bis 60 Min. bei Temperaturen im Bereich von 170 bis 210 °C sehr gute Ergebnisse gezeigt haben. Trotz dieser hohen Temperaturen wurden die beugungsoptisch wirksamen Strukturen in den Bereichen 9 und 10, die zwischen den Lack- oder Polymerschichten 12 und 14 eingeschlossen sind, nicht beschädigt oder zerstört. Auch konnte erreicht werden, dass die Transparenz der oberen Folie 2 nicht oder nur unwesentlich beeinträchtigt wurde.

Eine auf die vorstehende Art und Weise hergestellte, von einem Laminat gebildete Karte ist weitgehend fälschungssicher. Es ist vor allem gewährleistet, dass sich die beiden Folien 1, 2 nicht voneinander trennen lassen ohne zu auf jeden Fall feststellbaren Beschädigungen zu führen. Hierfür ist vor allem massgeblich, dass infolge der Verschmelzung der beiden Folien 1 und 2 in den freien Bereichen diese Lagen dort tatsächlich nicht voneinander trennbar sind. Eine Trennung könnte höchstens dort erfolgen, wo Sicherheits- oder Identifikationselemente vorgesehen sind. Auch hier ist jedoch damit zu rechnen, dass infolge der beim Verbinden der beiden Folien 1, 2 angewendeten Bedingungen auch die Sicherheits- bzw. Identifikationselemente an beiden Folien relativ gut haften, so dass auch diese Elemente beim Versuch einer Trennung der beiden Folien beschädigt werden.

In den Figuren 2 und 3 ist die freie Fläche 18 der oberen Folie 2 relativ uneben gezeigt. In Wirklichkeit wird sich die freie Oberfläche 18 der Folie 2 infolge der beim Laminieren verwendeten Temperaturen und Drücke weitgehend plan ausbilden.

In den Figuren 4 bis 6 sind schematisch einige Beispiele für Schichtfolgen, wie sie im Rahmen der Erfindung verwendet werden können gezeigt.

In sämtlichen Fällen ist eine untere Folie 1 vorhanden, die aus Polycarbonat besteht, wobei in der Praxis Foliendicken von etwa 50 bis 200 µm verwendet werden.

Zur Verbesserung der Haftung von entsprechenden Sicherheitselementen 19, 19a, 19b auf der unteren Folie 1 kann es zweckmässig sein, die untere Folie 1 in den Bereichen, wo später die Sicherheitselemente 19, 19a, 19b haften sollen, vorab mit einem geeigneten Primer oder Kleber 20 zu bedrucken, wobei auch denkbar ist, einen entsprechenden Kleberaufdruck 20a auch auf der oberen Folie 2 vorzusehen, wie dies in Figur 5 gezeigt ist. Bei dem Kleber 20, 20a kann es sich beispielsweise um einen Heiss-Siegelkleber der bekannten Art, aber auch um einen druckempfindlichen Kaltkleber handeln.

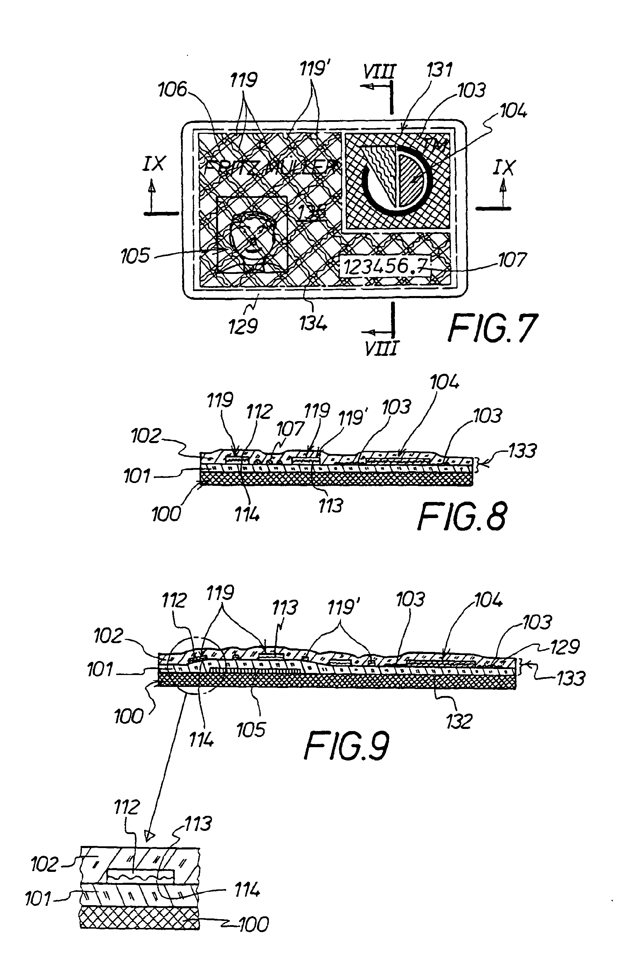

Die Sicherheitselemente 19, 19a, 19b sind bei den Ausführungsbeispielen der Figuren 4 bis 6 unterschiedlich aufgebaut, wobei sich die Ausführungsform der Figur 4 von denen der Figuren 5 und 6 dadurch unterscheidet, dass in Figur 4 mehrere Sicherheitselemente 19 bzw. Abschnitte eines Sicherheitselementes vorhanden sind, die feine Elemente oder alphanumerischen Zeichen bilden. Die Sicherheitselemente 19 gemäss Figur 4 sind zweckmässig innerhalb eines zusammenhängenden Flächenbereiches, wie er bezüglich Figur 7 näher erläutert wird, angeordnet und haben eine maximale Breite s, s' (in einer Richtung) von weniger als 5 mm. Vorzugsweise liegt die Breite s, s' zwischen 0,1 bis 3,0 mm. In der Richtung quer zu der für die Breite s, s' massgeblichen Richtung können die Abmessungen der Sicherheitselemente 19 beliebig sein. Es muss innerhalb des jeweiligen zusammenhängenden Flächenbereiches nur gewährleistet sein, dass ein Anteil von 65 bis 95 % der Fläche des Flächenbereiches frei von Sicherheitselementen 19 ist, so dass insoweit die PC-Folien 1, 2 einander direkt benachbart sind und unmittelbar miteinander verschmelzen können.

Bei den Sicherheitselementen 19 gemäss Figur 4 handelt es sich um die Dekorschichten von an sich für diese Zwecke bekannten Heissprägefolien.

Die Sicherheitselemente 19 umfassen im vorliegenden Falle zwei Schutzlackschichten 21, 22. An die innere Schutzlackschicht 22 schliesst eine Replizierlackschicht 23 an. In die Replizierlackschicht 23 ist eine beugungsoptisch wirksame Struktur eingeprägt, die mit einer ihre Erkennbarkeit verbessernden Beschichtung 24 versehen ist. Bei der z.B. reflexionserhöhenden Beschichtung 24 kann es sich z.B. um eine aufgedampfte Metallschicht, vorzugsweise aber um die Schicht eines geeigneten, auch transparenten Dielektrikums, beispielsweise TiO₂, oder um teilweise demetallisierte Bereiche handeln, wobei wesentlich ist, dass entsprechende Brechungsindex-Differenzen von wenigstens 0,3, vorzugsweise wenigstens 0,5, zwischen der Beschichtung 24 und den in Betrachtungsrichtung vorhergehenden Schichten bestehen. Als letzte Schicht weist die Dekorlage der in Figur 4 gezeigten Heissprägefolie eine thermoplastische Heissklebeschicht 25 auf. Es wäre allerdings auch denkbar, statt dieser Heissklebeschicht 25 eine entsprechende Lack- oder Polymerschicht vorzusehen, wenn, wie in Figur 4 gezeigt, bereits die untere Folie 1 einen entsprechenden Kleber 20 trägt.

Die diversen Schichten des Sicherheitselementes 19 sind im allgemeinen grossflächig auf einem Trägerfilm, der hier nicht gezeigt ist, aufgebracht, der auf der dem Kleber 25 abgekehrten Seite der Sicherheitselemente 19 zu denken wäre. Die Aufbringung der Sicherheitselemente auf die untere Folie 1 erfolgt dann derart, dass die Heissprägefolie mit der Klebeschicht 25 bzw. einer entsprechenden Lackschicht auf die entsprechende Seite der unteren Folie 1 aufgelegt und unter Einwirkung von Wärme und Druck mittels eines dem gewünschten Sicherheitselement-Muster entsprechend gestalteten Werkzeugs, insbesondere Stempels, angepresst wird. Beim Abziehen des Trägerfilms haften dann die Bereiche der Dekorlage der Heissprägefolie, die die Sicherheitselemente 19 bilden sollen und den erhabenen Bereichen des Stempels od. dgl. entsprechen, an den mit Kleber versehenen Bereichen 20 der unteren Folie 1. In den Zwischenräumen wird die Dekorlage zusammen mit dem Trägerfilm abgezogen. Auf diese Weise lassen sich sehr feine graphische Gestaltungen der Sicherheitselemente 19 erreichen.

Nach dem Aufbringen der Sicherheitselemente 19 auf die untere Folie 1 aus Polycarbonat wird dann die obere PC-Folie 2 aufgelegt und angepresst. Auch die obere Folie 2 hat vorteilhafterweise eine Dicke von etwa 50 bis 200 µm. Insofern erweckt die Darstellung in Figur 4 einen unrichtigen Eindruck, weil nämlich die Dicke der Heisskleberschicht 20 auf der unteren Folie 1 nur etwa 2 bis 5 µm, die der Sicherheitselemente insgesamt nur etwa 3 bis 10 µm beträgt. Infolgedessen bereitet es keine Probleme, die obere Folie 2 in den Zwischenräumen zwischen den Sicherheitselementen 19 zur Anlage an der unteren Folie 1 zu bringen um so die entsprechende Verbindung zuverlässig herzustellen.

Bei der Ausführungsform der Figur 5 ist ein Sicherheitselement 19a vorgesehen, das etikettenartig ausgebildet ist. Um hier die Haftung der oberen Folie 2 noch zusätzlich zu verbessern, ist die obere Folie 2 im Bereich des Sicherheitselementes 19a ebenfalls mit einer Heisskleber-Beschichtung versehen, wobei die Kleberschichten 20, 20a etwa eine Dicke von 2 bis 5 µm haben können.

Die Folie, aus der das Sicherheitselement 19a beispielsweise ausgestanzt oder ausgeschnitten ist, stimmt im wesentlichen mit der die Sicherheitselemente 19 bildenden Heissprägefolie überein. Ein Unterschied ist aber der, dass eine Trägerschicht 26, beispielsweise eine Polyesterschicht, zusätzlich vorhanden ist, die allerdings nur die Handhabung erleichtert und durchaus auch entfallen kann, wie dies beim Sicherheitselement 4 der Karte nach Figur 1 der Fall ist. Wenn die Schicht 26 vorhanden ist, hat das Element 19a eine wesentlich grössere Dicke als die Sicherheitselemente 19. Die Dicke des Sicherheitselementes 19a kann beispielsweise 20 bis 60 µm betragen.

Erwähnenswert an dem Ausführungsbeispiel der Figur 5 ist ausserdem noch, dass bei diesem die Beschichtung 24 der Struktur nicht ganzflächig sondern, beispielsweise in Form eines bestimmten, feinen Musters, nur teilflächig oder als Kombination verschiedener, z.B. die Reflexion erhöhender Medien vorgesehen ist. Verfahren zur Herstellung derartiger teilflächiger Beschichtungen sind allgemein bekannt.

In Figur 6 ist schliesslich noch eine für spezielle Anwendungen gedachte Ausführungsform gezeigt, bei welcher das Sicherheitselement 19b von einem Sticker gebildet ist, der sich von dem Sicherheitselement 19a gemäss Figur 5 dadurch unterscheidet, dass zusätzlich auf der freien Oberfläche des Trägers 26, beispielsweise eines Polyesterfilms, ein Kleber 27 vorhanden ist. Das Sicherheitselement 19b gemäss Figur 6 kann beispielsweise eine Dicke von 50 bis 80 µm haben.

Infolge des Vorhandenseins von Kleber an beiden Oberflächen des Stickers 19b kann grundsätzlich darauf verzichtet werden, die entsprechenden Oberflächen der Folien 1, 2 mit einem Kleber vor dem Einbringen des Sicherheitselementes 19b zu versehen. Dies gilt im übrigen grundsätzlich auch für die Kleber 20, 20a in den Figuren 4 und 5, nachdem die Sicherheit hauptsächlich dadurch erreicht wird, dass die Folien 1, 2 in den freien Bereichen zwischen den Sicherheitselementen 19, 19a, 19b direkt miteinander verschmolzen werden. Es muss allerdings dafür gesorgt werden, dass wenigstens ein einem Anteil von 25 % der Gesamtfläche des Laminates die PC-Folien 1, 2 direkt aneinander anliegen und miteinander verschmolzen werden.

Generell kann bezüglich der Herstellung des Laminates gemäss der Erfindung noch festgestellt werden, dass es unter bestimmten Umständen zweckmässig sein kann, entweder das fertiggestellte Laminat oder die einzelnen, die Decklage bildenden Flächenmaterialien an der im Gebrauch aussenliegenden Seite ganz oder teilweise mit einer Beschichtung zu versehen, die z.B. als Signierfeld verwendet werden kann. Auch ein Oberflächendruck kann zusätzlich vorgesehen werden, sei es als zusätzliches Sicherheitselement, sei es, um eine aus dem Laminat hergestellte Karte zu personalisieren, d.h. an der Karte Informationen über den Karteninhaber anzubringen.

In den Figuren 7 bis 9 ist eine weitere Ausführungsform eines Laminates gemäss der Erfindung gezeigt, wobei es sich um eine Karte handelt, die gegenüber dem Ausführungsbeispiel der Figuren 1 bis 3 eine zusätzliche Schicht, nämlich einen Träger 100, aufweist. Der Träger 100 kann bezüglich des Benutzers individualisiert sein, wobei zu diesem Zweck der Träger 100, beispielsweise ein entsprechender Karton bzw. eine Plastikkarte, auf seiner beim Gebrauch abgedeckten Oberfläche 132 Elemente trägt, die auf den jeweiligen Benutzer abgestimmt sind, beispielsweise eine Photographie 105 sowie ein Schriftfeld 106 mit dem Namen des Benutzers.

Der Träger 100 der Karte gemäss Figuren 7 bis 9 ist dann mit einem im Prinzip dem Laminat der Figuren 1 bis 3 entsprechenden, insgesamt mit 133 bezeichneten Laminat abgedeckt.

Das Laminat 133 besteht ebenfalls aus zwei Folien 101 und 102 aus Polycarbonat. Zwischen diesen Folien ist einerseits ein aus dem Sicherheitsdruck 103 sowie andererseits aus verschiedenen beugungsoptisch wirksamen Bereichen zusammengesetztes Sicherheitselement 104 vorgesehen, wobei der Sicherheitsdruck 103 gemeinsam mit dem beugungsoptisch wirksamen Sicherheitselement 104 ein Gesamt-Sicherheitselement 131 bildet. Bezüglich Ausbildung und Anordnung des Gesamt-Sicherheitselementes 131 kann auf die entsprechende Beschreibung des Druckbereiches 3 sowie des Sicherheitselementes 4 und deren Anordnung zwischen den Folien 1 und 2 im Zusammenhang mit den Figuren 1 bis 3 verwiesen werden.

Weiterhin ist bei der Karte gemäss Figur 7 ein Schriftfeld 107 vorgesehen, das beispielsweise von einer fortlautenden Nummer belegt wird. Diese fortlaufende Nummer 107 kann z.B. durch einen Aufdruck auf die Folie 101 vor dem Zusammenlaminieren der Folien 101 und 102 gebildet werden.

Die Besonderheit der Karte gemäss den Figuren 7 bis 9 gegenüber der Karte nach den Figuren 1 bis 3 besteht nun darin, dass die Photographie 105 sowie der Name 106 des Karteninhabers nicht zwischen den beiden Folien 101, 102 sondern zwischen dem Träger 100 und der Folie 101 angeordnet sind.

Als zusätzliche Sicherheitsmassnahme ist nun das Laminat 133, das das Namensfeld 106 sowie die Photographie 105 abdeckt, in dem durch die strichpunktierte Linie 134 angedeuteten zusammenhängenden Flächenbereich ausserhalb des Gesamt-Sicherheitselementes 131 sowie des Schriftfeldes 107 mit einer zusätzlichen Sicherung in Form von relativ feinen graphischen Elementen 119 bzw. 119' versehen, die zwischen den Folien 101 und 102 vorgesehen sind.

Bei dem dargestellten, schematischen Ausführungsbeispiel der Figuren 7 bis 9 sind die graphischen Elemente in Form von breiteren Linien 119 und schmäleren Linien 119' vorgesehen, wobei aus Gründen der entsprechend festen Haftung der Folien 101 und 102 aneinander dafür gesorgt werden muss, dass zum einen die Linienbreite oder Punktgrösse der graphischen Elemente 119, 119' weniger als 5 mm in einer Richtung beträgt, wobei besonders günstig Abmessungen zwischen 0,1 und 3 mm sind. Zum anderen muss sichergestellt sein, dass in dem durch die strichpunktierte Linie 134 angedeuteten, zusammenhängenden Flächenbereich 135 (Figur 7) ein Flächenanteil von wenigstens 50 % nicht mit den feinen graphischen Elementen 119, 119' bedeckt ist. Zweckmässig ist es, wenn die graphischen Elemente 119, 119' lediglich einen Anteil von 5 bis 35 % des zusammenhängenden Flächenbereiches 135 bedecken, so dass im Rest dieses Flächenbereiches, d.h. in etwa 65 bis 95 %, die Folien 101 und 102 direkt aneinander anliegen und durch Verschmelzen unmittelbar miteinander verbunden werden können.

Bei dem gezeigten Ausführungsbeispiel sind die graphischen Elemente 119, 119' von Beugungsstrukturen gebildet, die ähnlich den Sicherheitselemeten 19, 19a, 19b in den Figuren 4 bis 6 ausgebildet sind.

Die graphischen Elemente 119, 119' bestehen beispielsweise aus zwei Lackschichten 112, 114, die zwischen sich eine entsprechende, beugungsoptisch wirksame Struktur einschliessen. Diese Struktur ist mit einer ihre Erkennbarkeit verbessernden, z.B. reflexionserhöhenden Beschichtung 113 versehen, um sie deutlich sichtbar zu machen.

Nachdem bei dem Ausführungsbeispiel der Figur 7 die graphischen Elemente 119, 119' sowohl das Namensfeld 106 als auch das Bild 105 überdecken, sind die Elemente 119, 119' derart ausgebildet, dass sie durchsichtig sind. Dies wird dadurch erreicht, dass die Beschichtung 113 aus einem dielektrischen Material, beispielsweise aufgedampften TiO₂ besteht, wie dies im Zusammenhang mit dem Ausführungsbeispiel der Figuren 1 bis 3 bereits oben grundsätzlich erläutert wurde.

Auch die Karte gemäss Figur 7 ist im übrigen so ausgebildet, dass ein Randbereich 129 frei von jeglichen Sicherheitselementen od. dgl. ist, so dass die Folien 101 und 102 in diesem Randbereich 129 entsprechend fest miteinander verbunden sind und das Eintreten von Feuchtigkeit od. dgl. zwischen die Folien 101 und 102 zuverlässig verhindert wird.

Bei der Herstellung der Karte gemäss Figur 7 wird einerseits in einem ersten Verfahrensschritt der Träger 100 mit der Photographie 105 und ggf. dem Namen des Inhabers im Schriftfeld 106 versehen. Insofern wird also der Träger 100 jeweils an den Inhaber des Ausweises od. dgl. angepasst.

Zum Schutz wird dann der Träger 100 mit Bild 105 und Namen 106 mit dem Laminat 133 überkaschiert, das, da es für sämtliche Ausweise od. dgl. gleich gestaltet werden kann, bereits vorbereitet ist. Allerdings ist es durchaus möglich, auch das Laminat 133 wenigstens in dem Sinne zu individualisieren, dass die fortlaufende Nummer im Schriftfeld 107 sich von Laminat zu Laminat ändert, was bei der beschriebenen Ausbildung des Laminates leicht möglich ist, da die Nummer im Schriftfeld 107 beispielsweise vor dem Zusammenlaminieren der Folien 101 und 102 aufgedruckt wird und infolgedessen leicht variiert werden kann.

Hinsichtlich der Gestaltung der Sicherheits- bzw. Identifikationselemente hat das Laminat gemäss der Erfindung den grossen Vorteil, dass weitgehende Freiheit besteht, weil erfindungsgemäss auch sehr feine Strukturen als Sicherheits- oder Identifikationselemente eingesetzt werden. Erstaunlicherweise hat sich gezeigt, dass bei einem Laminat gemäss der Erfindung sich die beiden Folien auch dann verbinden, wenn zwischen den eingeschlossenen Elementen nur vergleichsweise geringe Abstände, also z.B. feine Linien, Punkte geringen Durchmessers etc., vorhanden sind. Trotz Einsatzes vergleichsweise hoher Temperaturen für das Zusammenlaminieren der Folien aus Polycarbonat können Sicherheitselemente in Form von Heissprägefolien verwendet werden, bei denen die hierfür üblichen Lacke verwendet sind, d.h. Sicherheitselemente, bei denen in Folge der Eigenschaften der verwendeten Lackschichten bisher davon ausgegangen wurde, dass ihre Aufbringung nur bei effektiven Materialtemperaturen im Bereich zwischen 60 und 160 °C und bei sehr kurzen Einwirkzeiten erfolgen durfte.

## Patentansprüche

1. Laminat, insbesondere in Form von Karten, z.B. Ausweisen, Kreditkarten od. dgl. umfassend wenigstens zwei fest miteinander verbundene Folien 1, 2; 101, 102), zwischen denen Sicherheitselemente (3, 4, 19, 19a, 19b; 103, 104, 119, 119') und ggf. Identifikationselemente (5, 6, 7; 105, 106, 107) angeordnet sind, wobei wenigstens eine der Folien (2, 102) halb oder vollständig transparent ist, so dass die Sicherheits- und ggf. Identifikationselemente (3 bis 7, 19, 19a, 19b; 103 bis 107, 119, 119') durch diese transparente Folie (2, 102) hindurch sichtbar sind, und wobei weiter wenigstens ein Sicherheitselement (19, 19a, 19b; 119, 119') von einer räumlichen, beugungsoptisch wirksamen Struktur gebildet ist, die durch eine entsprechend strukturierte und mit einer die Erkennbarkeit der Struktur verbessernden Beschichtung (13, 24; 113) versehene Oberfläche einer Lack- oder Polymerschicht (12, 14; 112, 114) erzeugt ist,
**dadurch gekennzeichnet,**
**dass** die Sicherheits- und ggf. Identifikationselemente (3 bis 7, 19, 19a, 19b; 103 bis 107, 119, 119') von wenigstens einer Farb- oder Lackschicht (12, 14; 112, 114) sowie in wenigstens einem zusammenhängenden Flächenbereich (31; 135) des Laminates von feinen graphischen Elementen (30; 119, 119') oder alphanumerischen Zeichen einer maximalen Linienbreite oder Punktgröße (s, s') von weniger als 5,0 mm in einer Richtung gebildet sind, die derart angeordnet sind, dass in einem Anteil von wenigstens 50 % der Gesamtfläche der jeweiligen zusammenhängenden Flächenbereiche (6, 7, 31; 107, 131, 135) die die Sicherheits- und ggf. Identifikationselemente einschließenden Folien (1, 2; 101, 102) zueinander direkt benachbart sind, und dass diese benachbarten Folien (1, 2; 101, 102) aus Polycarbonat (PC) von im wesendlichen übereinstimmender Zusammensetzung bestehen und im Bereich ihrer Berührungsflächen miteinander verschmolzen sind.

2. Laminat nach Anspruch 1,
**dadurch gekennzeichnet,**
**dass** die die Sicherheits- und ggf. Identifikationselemente bildenden Striche (30; 119, 119') od. dgl. eine Strichbreite (s, s') zwischen 0,1 und 3,0 mm aufweisen.

3. Laminat nach Anspruch 1 oder 2,
**dadurch gekennzeichnet,**
**dass** wenigstens 25 % der Gesamtfläche des Laminates bzw. jeder Karte frei von den Sicherheitselementen (4, 19, 19a, 19b; 104, 119, 119'), vom Flächenbereich (31; 131) eines Sicherheitsdrucks (3; 103) und ggf. von den Identifikationselementen (5, 6, 7; 107) sind, so dass die die Sicherheits- und ggf. die Identifikationselemente (3 bis 7, 19, 19a, 19b; 103 bis 107, 119, 119') einschließenden Folien (1, 2; 101, 102) in einem Anteil von wenigstens 25 % der Gesamtfläche des Laminates einander direkt benachbart sind.

4. Laminat nach einem der vorhergehenden Ansprüche,
**dadurch gekennzeichnet,**
**dass** die die Sicherheits- und ggf. Identifikationselemente (3 bis 7, 19, 19a, 19b; 103 bis 107, 119, 119') einschließenden Folien (1, 2; 101, 102) in den jeweiligen zusammenhängenden Flächenbereichen (6, 7, 31; 107, 131, 135) mit den feinen graphischen Elementen (30; 30, 119, 119') oder mit den alphanumerischen Zeichen der Beschriftung in einem Anteil von 65 bis 95 % der Fläche der jeweiligen zusammenhängenden Flächenbereiche (6, 7, 31; 107, 131, 135) einander direkt benachbart sind.

5. Laminat nach einem der vorhergehenden Ansprüche,
**dadurch gekennzeichnet,**
**dass** bei kartenförmiger Ausbildung entlang des Kartenrandes ein Bereich (29; 129) von wenigstens 3 mm, vorzugsweise von 3 bis 10 mm Breite (b) frei von Sicherheits- oder Identifikationselementen (3 bis 7, 19, 19a; 19b; 103 bis 107; 119; 119') ist.

6. Laminat nach einem der vorhergehenden Ansprüche,
**dadurch gekennzeichnet,**
**dass** die die Erkennbarkeit der Struktur verbessernde Beschichtung (13; 113) der wenigstens ein Sicherheitselement (19; 19a; 19b) bildenden, beugungsoptisch wirksamen Struktur von einem durchsichtigen Material gebildet ist, welches gegenüber dem an die Beschichtung angrenzenden, in Betrachtungsrichtung davorliegenden Material einen deutlich unterschiedlichen Brechungsindex aufweist.

7. Laminat nach Anspruch 6,
**dadurch gekennzeichnet,**
**dass** der Unterschied zwischen dem Brechungsindex der Beschichtung (13; 113) und dem des angrenzenden Materials wenigstens 0,3, vorzugsweise wenigstens 0,5 beträgt.

8. Laminat nach einem der vorhergehenden Ansprüche,
**dadurch gekennzeichnet,**
**dass** zwischen der Beschichtung (13; 113) der räumlichen Struktur des wenigstens einen Sicherheitselementes (19; 119, 119') und jeder Folie (1, 2; 101, 102) wenigstens eine Lack- oder Polymerschicht (12, 14; 112, 114) angeordnet ist.

9. Laminat nach einem der vorhergehenden Ansprüche,
**dadurch gekennzeichnet,**
**dass** wenigstens eines der Sicherheits- und/oder Identifikationselemente (4, 19; 104) von der Dekorschicht einer Transferfolie, insbesondere
Heissprägefolie, gebildet ist.

10. Laminat nach einem der vorhergehenden Ansprüche,
**dadurch gekennzeichnet,**
**dass** ausserhalb des die feinen Elemente (30; 119, 119') aufweisenden zusammenhängenden Flächenbereiches (31; 135) wenigstens ein Sicherheits- und/oder Identifikationselement (131) in Form eines ein- oder mehrlagigen etikettenartigen Flächenelementes vorgesehen ist.

11. Laminat nach Anspruch 9 oder 10,
**dadurch gekennzeichnet,**
**dass** wenigstens eines der Sicherheits- und/oder Identifikationselemente (4; 19, 19a, 19b) an einer Oberfläche eine Kleberschicht (15, 25, 27) aufweist.

12. Laminat nach einem der vorhergehenden Ansprüche,
**dadurch gekennzeichnet ,**
**dass** mindestens eine der Folien (1, 2) passerhaltig zu den Sicherheits- und/oder Identifikationselementen (19, 19a) mit einem Kleberauftrag (20, 20a) versehen ist.

13. Laminat nach einem der vorhergehenden Ansprüche,
**dadurch gekennzeichnet,**
**dass** mindestens eine der Folien (1) an ihrer freien Oberfläche (16) ganz- oder teilflächig mit einer Beschichtung, z.B. mit einem Aufdruck, einem Unterschriftenfeld, einem Magnetstreifen (17), einer Schutzschicht od. dgl. versehen ist.

14. Verfahren zur Herstellung eines Laminats (133) aus wenigstens zwei Folien (1, 2; 101, 102), von denen mindestens eine (2; 101, 102) halb oder vollständig transparent ist und zwischen denen eine beugungsoptisch wirksame Struktur (9, 10, 23) aufweisende Sicherheitselement (4, 19, 19a, 19b; 104, 119, 119') und ggf. Identifikationselemente (5, 6, 7; 107) angeordnet sind, nach einem der vorhergehenden Ansprüche, wobei auf eine erste Folie (1; 101) die Sicherheits- und/oder Identifikationselemente (3 bis 7, 19; 103, 104, 107, 119, 119') aufgebracht werden und anschließend die zweite Folie (2; 102) unter Einwirkung von Wärme und Druck ganzflächig auflaminiert wird,
**dadurch gekennzeichnet,**
**dass** als Folien Polycarbonat-Folien verwendet werden, dass auf die erste Folie (1; 101) Sicherheitselemente (4, 19; 104, 119, 119'), die wenigstens zwei gehärtete oder trockene, transparente Lack- oder Polymerschichten (12, 14; 112, 114) sowie eine durchsichtige, die Erkenntlichkeit einer Struktur verbessernde Beschichtung (13; 113) umfassen, und ein Sicherheitsdruck (3; 103) im Flächenbereich (31; 131) und ggf.
Identifikationselemente (5, 6, 7; 107) in einem Transfer- oder Druck- oder Laminierverfahren aufgebracht werden, wobei die Sicherheitselemente (4, 19; 104, 119, 119'), der Flächenbereich (31; 131) des Sicherheitsdruckes (3, 103) und/oder die Identifikationselemente (5, 6, 7; 107) höchstens 65 % der Gesamtfläche des Laminates abdecken, dass anschließend die zweite Folie (2; 102) aufgebracht wird, und dass dann die gebildete Schichtanordnung (133) einer derartigen Wärmebehandlung unterzogen wird, dass die beiden Folien (1, 2; 101, 102) in ihren einander benachbarten Bereichen, in denen keine Sicherheits- oder Identifikationselemente vorhanden sind, miteinander verschmelzen.

15. Verfahren nach Anspruch 14,
**dadurch gekennzeichnet,**
**dass** die Heißverpressung während 1 bis 60 Minuten, vorzugsweise während 10 bis 50 Minuten, bei einer Temperatur von 170 bis 210 °C erfolgt.

16. Verfahren nach einem der Ansprüche 14 oder 15,
**dadurch gekennzeichnet,**
**dass** wenigstens die erste Folie (1) vor dem Aufbringen der Sicherheits- und/oder Identifikationselemente (3 bis 7, 19, 19a; 103, 104, 107, 119, 119') bereichsweise, vorzugsweise passerhaltig zu wenigstens bestimmten dieser Elemente, mit einem Primer- oder Kleberauftrag (20, 20a) versehen wird.

## Claims

1. Laminate, in particular in the form of cards, for example identity cards, credit cards or the like, comprising at least two firmly bonded-together films (1, 2; 101, 102), between which security elements (3, 4, 19, 19a, 19b; 103, 104, 119, 119') and possibly identification elements (5, 6, 7; 105, 106, 107) are arranged, wherein at least one of the films (2, 102) is semitransparent or completely transparent, so that the security elements and possibly identification elements (3 to 7, 19, 19a, 19b; 103 to 107, 119, 119') can be seen through this transparent film (2, 102), and wherein furthermore at least one security element (19, 19a, 19b; 119, 119') is formed by a three-dimensional, diffractive structure, which is created by a surface of a lacquer or polymer layer (12, 14; 112, 114) that is correspondingly structured and provided with a coating (13, 24; 113) that improves the perceptibility of the structure, **characterized in that** the security elements and possibly identification elements (3 to 7, 19, 19a, 19b; 103 to 107, 119, 119') of at least one paint or lacquer layer (12, 14; 112, 114) and in at least one contiguous surface-area region (31; 135) of the laminate are formed by fine graphic elements (30; 119, 119') or alphanumeric characters of a maximum line width or point size (s, s') of less than 5.0 mm in one direction, which are arranged in such a way that, in a proportion of at least 50% of the total surface area of the respective contiguous surface-area regions (6, 7, 31; 107, 131, 135), the films (1, 2; 101, 102) enclosing the security elements and possibly identification elements are directly adjacent to one another, and that these adjacent films (1, 2; 101, 102) consist of polycarbonate (PC) of a substantially identical composition and are fused together in the region of their areas of contact.

2. Laminate according to Claim 1, **characterized in that** the lines (30; 119, 119') or the like forming the security elements and possibly identification elements have a line width (s, s') of between 0.1 and 3.0 mm.

3. Laminate according to Claim 1 or 2, **characterized in that** at least 25% of the total surface area of the laminate or of each card is free of the security elements (4, 19, 19a, 19b; 104, 119, 119'), of the surface-area region (31; 131) and of a security print (3; 103) and possibly of the identification elements (5, 6, 7; 107), so that the films (1, 2; 101, 102) enclosing the security elements and possibly identification elements (3 to 7, 19, 19a, 19b; 103 to 107, 119, 119') are directly adjacent to one another in a proportion of at least 25% of the total surface area of the laminate.

4. Laminate according to one of the preceding claims, **characterized in that** the films (1, 2; 101, 102) enclosing the security elements and possibly identification elements (3 to 7, 19, 19a, 19b; 103 to 107, 119, 119') are directly adjacent to one another in the respective contiguous surface-area regions (6, 7, 31; 107, 131, 135) with the fine graphic elements (30; 30, 119, 119') or with the alphanumeric characters of the inscription in a proportion of 65 to 95% of the surface area of the respective contiguous surface-area regions (6, 7, 31; 107, 131, 135).

5. Laminate according to one of the preceding claims, **characterized in that,** in the case of a card-shaped form, along the edge of the card there is a region (29; 129) of at least 3 mm, preferably of 3 mm to 10 mm, in width (b) that is free from security or identification elements (3 to 7, 19, 19a; 19b; 103 to 107; 119; 119').

6. Laminate according to one of the preceding claims, **characterized in that** the coating (13; 113) of the diffractive structure forming at least one security element (19; 19a; 19b) that improves the perceptibility of the structure is formed by a translucent material, which has a significantly different refractive index than the material adjacent to the coating and lying in front of it in the viewing direction.

7. Laminate according to Claim 6, **characterized in that** the difference between the refractive index of the coating (13; 113) and that of the adjacent material is at least 0.3, preferably at least 0.5.

8. Laminate according to one of the preceding claims, **characterized in that** at least one lacquer or polymer layer (12, 14; 112, 114) is arranged between the coating (13; 113) of the three-dimensional structure of the at least one security element (19; 119, 119') and each film (1, 2; 101, 102).

9. Laminate according to one of the preceding claims, **characterized in that** at least one of the security and/or identification elements (4, 19; 104) is formed by the decorative layer of a transfer film, in particular a hot-embossed film.

10. Laminate according to one of the preceding claims, **characterized in that** at least one security and/or identification element (131), in the form of a single-layer or multi-layer label-like surface element, is provided outside the contiguous surface-area region (31; 135) having the fine elements (30; 119, 119').

11. Laminate according to Claim 9 or 10, **characterized in that** at least one of the security and/or identification elements (4; 19, 19a, 19b) has an adhesive layer (15, 25, 27) on one surface.

12. Laminate according to one of the preceding claims, **characterized in that** at least one of the films (1, 2) is provided with an adhesive coat (20, 20a) in register with the security and/or identification elements (19, 19a).

13. Laminate according to one of the preceding claims, **characterized in that** at least one of the films (1) is provided over the whole or part of its free surface (16) with a coating, for example with an imprint, a signature field, a magnetic strip (17), a protective layer or the like.

14. Method for producing a laminate (133) from at least two films (1, 2; 101, 102), at least one (2; 101, 102) of which is semitransparent or completely transparent and between which a security element (4, 19, 19a, 19b; 104, 119, 119') having a diffractive structure (9, 10, 23) and possibly identification elements (5, 6, 7; 107) are arranged, according to one of the preceding claims, wherein the security and/or identification elements (3 to 7, 19; 103, 104, 107, 119, 119') are applied to a first film (1; 101) and subsequently the second film (2; 102) is laminated on over the whole surface area under the effect of heat and pressure, **characterized in that** polycarbonate films are used as the films, **in that** security elements (4, 19; 104, 119, 119'), which comprise at least two hardened or dried, transparent lacquer or polymer layers (12, 14; 112, 114) and a translucent coating (13; 113) that improves the perceptibility of a structure, and a security print (3; 103) in the surface-area region (31; 131) and possibly identification elements (5, 6, 7; 107) are applied to the first film (1; 101) in a transfer or printing or laminating process, with the security elements (4, 19; 104, 119, 119'), the surface-area region (31; 131) of the security print (3, 103) and/or the identification elements (5, 6, 7; 107) covering at most 65% of the total surface area of the laminate, **in that** subsequently the second film (2; 102) is applied, and **in that** the layer arrangement (133) formed is then subjected to such heat treatment that the two films (1, 2; 101, 102) fuse together in their mutually adjacent areas in which no security or identification elements are present.

15. Method according to Claim 14, **characterized in that** the hot pressing is performed for 1 to 60 minutes, preferably for 10 to 50 minutes, at a temperature of 170 to 210°C.

16. Method according to either of Claims 14 and 15, **characterized in that,** before the security and/or identification elements (3 to 7, 19, 19a; 103, 104, 107, 119, 119') are applied, at least the first film (1) is provided with a primer or adhesive coat (20, 20a) in certain areas, preferably in register with at least certain ones of these elements.

## Revendications

1. Stratifié, en particulier sous forme de cartes, par exemple de cartes d'identité, de cartes de crédit ou similaires, comprenant au moins deux films (1, 2 ; 101, 102) reliés fixement entre eux, entre lesquels des éléments de sécurité (3, 4, 19, 19a, 19b ; 103, 104, 119, 119') et éventuellement d'identification (5, 6, 7 ; 105, 106, 107) sont disposés, au moins l'un des films (2, 102) étant semi ou complètement transparent de sorte que les éléments de sécurité et éventuellement d'identification (3 à 7, 19, 19a, 19b ; 103 à 107, 119, 119') soient visibles au travers de ce film (2, 102) transparent, et encore au moins un élément de sécurité (19, 19a, 19b ; 119, 119') étant formé par une structure spatiale, active de manière diffractive optiquement qui est générée par une surface structurée en conséquence et pourvue d'un revêtement (13, 24 ; 113) améliorant la perceptibilité de la structure d'une couche de laque ou de polymère (12, 14 ; 112, 114),
**caractérisé en ce**
**que** les éléments de sécurité et éventuellement d'identification (3 à 7, 19, 19a, 19b ; 103 à 107, 119, 119') sont formés par au moins une couche de couleur ou de laque (12, 14 ; 112, 114) ainsi que dans au moins une zone de surface (31 ; 135) contiguë du stratifié par des éléments (30 ; 119 ; 119') graphiques fins ou des symboles alphanumériques d'une largeur de ligne maximale ou grandeur de point (s, s') inférieure à 5 mm dans un sens, qui sont disposés de telle sorte que dans une part d'au moins 50 % de la surface totale des zones de surface (6, 7, 31 ; 107, 131, 135) contiguës respectives, les films (1, 2 ; 101, 102) incluant les éléments de sécurité et éventuellement les éléments d'identification soient directement contigus les uns aux autres, et que ces films (1, 2 ; 101, 102) contigus se composent de polycarbonate (PC) de composition concordante essentiellement et soient liés par fusion entre eux dans la zone de leurs surfaces de contact.

2. Stratifié selon la revendication 1,
**caractérisé en ce**
**que** les lignes (30 ; 119, 119') formant les éléments de sécurité et éventuellement d'identification ou similaires présentent une largeur de ligne (s, s') comprise entre 0,1 et 3 mm.

3. Stratifié selon la revendication 1 ou 2,
**caractérisé en ce**
**qu'**au moins 25 % de la surface totale du stratifié ou de chaque carte sont exempts d'éléments de sécurité (4, 19, 19a, 19b ; 104, 119, 119'), de la zone de surface (31 ; 131) d'une impression de sécurité (3 ; 103) et éventuellement d'éléments d'identification (5, 6, 7 ; 107) de sorte que les films (1, 2 ; 101, 102) incluant les éléments de sécurité et éventuellement d'identification (3 à 7, 19, 19a, 19b ; 103 à 107, 119, 119') soient directement contigus les uns aux autres dans une part d'au moins 25 % de la surface totale du stratifié.

4. Stratifié selon l'une quelconque des revendications précédentes,
**caractérisé en ce**
**que** les films (1, 2 ; 101, 102) incluant les éléments de sécurité et éventuellement d'identification (3 à 7, 19, 19a, 19b ; 103 à 107, 119, 119') sont directement contigus les uns aux autres dans les zones de surface (6, 7, 31 ; 107, 131, 135) contiguës respectives avec les éléments (30 ; 30, 119, 119') graphiques fins ou avec les symboles alphanumériques de l'inscription dans une part comprise entre 60 et 95 % de la surface des zones de surface (6, 7, 31 ; 107, 131, 135) contiguës respectives.

5. Stratifié selon l'une quelconque des revendications précédentes,
**caractérisé en ce**
**que** lors de la réalisation sous forme de cartes le long du bord de carte, une zone (29 ; 129) d'au moins 3 mm, de préférence de 3 à 10 mm de largeur (b) est exempte d'éléments de sécurité ou d'identification (3 à 7, 19, 19a ; 19b ; 103 à 107 ; 119 ; 119').

6. Stratifié selon l'une quelconque des revendications précédentes,
**caractérisé en ce**
**que** le revêtement (13 ; 113) améliorant la perceptibilité de la structure formant au moins un élément de sécurité (19 ; 19a, 19b), active de manière diffractive optiquement est formé par un matériau transparent qui présente un indice de réfraction nettement différent par rapport au matériau se trouvant devant dans le sens d'observation, contigu au revêtement.

7. Stratifié selon la revendication 6,
**caractérisé en ce**
**que** la différence entre l'indice de réfraction du revêtement (13 ; 113) et celui du matériau contigu s'élève au moins à 0,3, de préférence à au moins 0,5.

8. Stratifié selon l'une quelconque des revendications précédentes, **caractérisé en ce qu'**au moins une couche de laque ou de polymère (12, 14 ; 112, 114) est disposée entre le revêtement (13 ; 113) de la structure spatiale de l'au moins un élément de sécurité (19 ; 119, 119') et de chaque film (1, 2 ; 101, 102).

9. Stratifié selon l'une quelconque des revendications précédentes,
**caractérisé en ce**
**qu'**au moins l'un des éléments de sécurité et/ou d'identification (4, 19 ; 104) est formé par la couche décorative d'un film de transfert, en particulier d'un film d'estampage à chaud.

10. Stratifié selon l'une quelconque des revendications précédentes,
**caractérisé en ce**
**qu'**au moins un élément de sécurité et/ou d'identification (131) est prévu sous la forme d'un élément plan de type étiquette à une ou plusieurs couches en dehors de la zone de surface (31 ; 135) contiguë, présentant les éléments (30 ; 119, 119') fins.

11. Stratifié selon la revendication 9 ou 10,
**caractérisé en ce**
**qu'**au moins l'un des éléments de sécurité et/ou d'identification (4 ; 19, 19a, 19b) présente sur une surface une couche de colle (15, 25, 27).

12. Stratifié selon l'une quelconque des revendications précédentes,
**caractérisé en ce**
**qu'**au moins l'un des films (1, 2) est pourvu de manière à maintenir l'ajustement aux éléments de sécurité et/ou d'identification (19, 19a), d'une couche de colle (20, 20a).

13. Stratifié selon l'une quelconque des revendications précédentes,
**caractérisé en ce**
**qu'**au moins l'un des films (1) est pourvu sur sa surface (16) libre sur toute la surface ou sur une surface partielle d'un revêtement par exemple d'une impression, d'un champ de signature, d'une piste magnétique (17), d'une couche protectrice ou similaires.

14. Procédé de fabrication d'un stratifié (133) composé d'au moins deux films (1, 2 ; 101, 102), dont au moins un (2 ; 101, 102) est semi ou totalement transparent et entre lesquels, un élément de sécurité (4, 19, 19a, 19b ; 104, 119, 119') présentant une structure (9, 10, 23) active de manière diffractive optiquement et éventuellement des éléments d'identification (5, 6, 7 ; 107) sont disposés, selon l'une quelconque des revendications précédentes, sur un premier film (1 ; 101) étant appliqués les éléments de sécurité et/ou d'identification (3 à 7, 19 ; 103, 104, 107, 119, 119') et le second film (2 ; 102) étant ensuite stratifié sur toute la surface sous l'effet de la chaleur et de la pression,
**caractérisé en ce**
**que** des films de polycarbonate sont utilisés comme films, en ce que sur le premier film (1 ; 101), des éléments de sécurité (4, 19 ; 104, 119, 119') comprennent les au moins deux couches de laque ou de polymère (12, 14 ; 112, 114) transparentes, durcies ou sèches ainsi qu'un revêtement (13 ; 113) transparent, améliorant la reconnaissance d'une structure, et une impression de sécurité (3 ; 103) dans la zone de surface (31 ; 131) et éventuellement des éléments d'identification (5, 6, 7 ; 107) sont appliqués dans un procédé de transfert ou d'impression ou de stratification, les éléments de sécurité (4, 19 ; 104, 119, 119'), la zone de surface (31 ; 131) de l'impression de sécurité (3, 103) et/ou les éléments d'identification (5, 6, 7 ; 107) couvrant au maximum 65 % de la surface totale du stratifié, en ce que le second film (2 ; 102) est ensuite appliqué, et en ce que le bloc stratifié (133) formé est alors soumis à un tel traitement thermique que les deux films (1, 2 ; 101, 102) sont liés par fusion entre eux dans leurs zones contiguës, dans lesquelles aucun élément de sécurité ou d'identification n'est présent.

15. Procédé selon la revendication 14,
**caractérisé en ce**
**que** la compression à chaud est effectuée pendant 1 à 60 minutes, de préférence pendant 10 à 50 minutes à une température comprise entre 170 et 210 °C.

16. Procédé selon l'une quelconque des revendications 14 ou 15,
**caractérisé en ce**
**qu'**au moins le premier film (1) est pourvu avant l'application des éléments de sécurité et/ou d'identification (3 à 7, 19, 19a ; 103, 104, 107, 119, 119') par endroits, de préférence de manière à maintenir l'ajustement à au moins certains de ces éléments, d'une couche de fond ou de colle (20, 20a)..
